# EUROPÄISCHE PATENTSCHRIFT

(11) **EP 0 906 938 B1**
(45) Veröffentlichungstag und Bekanntmachung des Hinweises auf die Patenterteilung: **30.10.2002**
(21) Anmeldenummer: 98810953.4
(22) Anmeldetag: 22.09.1998
(51) Int. Cl.: C09B 67/02, C09B 67/10

(54) **Pigmentgranulierung**
Pigment granulation
Granulation d'un pigment

(30) Priorität: 01.10.1997 EP 97810724
(43) Veröffentlichungstag der Anmeldung: 07.04.1999
(60) Teilanmeldung: 01129221.6
(73) Patentinhaber: Ciba Specialty Chemicals Holding Inc., 4057 Basel (CH)
(72) Erfinder: Balliello, Paolo, 4310 Rheinfelden (CH)

(56) Entgegenhaltungen:
- EP-A- 0 424 896
- EP-A- 0 510 392
- DE-A- 2 748 243
- FR-A- 2 179 137
- FR-A- 2 352 582
- FR-A- 2 405 983
- US-A- 4 055 439
- SciFinder: CA-Registry Number 99688-45-6; Ausdruck vom 15.12.2000
- Coulour Index, 3rd Edition, Vol.3, p. 3798, 3799, 3802, 3803, 4586; and Vol.9, p. 5193
- HERBST, W.; HUNGER, K.: "Industrial Organic Pigments, p. 486-514.", 1993, VCH, WEINHEIM
- Falbe, J.; Regitz, M. Römpp Lexikon Chemie, 9. Aufl., Thieme Verlag Stuttgart, 1991, S. 3439-3442: "Pigmente"
- Falbe, J.; Regitz, M. Römpp Lexikon Chemie, 9. Aufl., Thieme Verlag Stuttgart, 1991, S. 2392: "Küpenfärberei"
- Ullmann's Encyclopedia of Industrial Chemistry, 5th ed., Vol. A2, VCH, Weinheim, 1985, pp. 355, 356, 407

## Beschreibung

Die Erfindung betrifft ein neues Verfahren zur Granulierung von im feuchten Zustand stark agglomerierenden organischen Farbpigmenten unter Einwirkung eines in seinem Molekül Sauerstoff enthaltenden gasförmigen inerten Stoffes, der bei 20°C/1 bar flüssig ist und einen Siedepunkt von nicht mehr als 150°C aufweist; insbesondere wässrigen oder alkoholischen Dämpfen.

Organische Pigmente bestehen aus sehr feinkörnigen, in üblichen Lösungsmitteln schwerlöslichen Partikeln, deren Dimensionen im Bereich von submikroskopisch bis etwa 100 µm liegen können. Für den praktischen Einsatz haben sich organische Pigmente mit ungefähren Korngrössen von 0,01 bis 0,1 µm für transparente Formen und von 0,1 bis 10 µm für deckende Formen am besten bewährt.

Solche Pigmente haben jedoch alle den grossen Nachteil, zu stauben. Bei deren Verwendung sind deswegen kostspielige Massnahmen (z.B. arbeitshygienischer, ökologischer, sicherheitstechnischer oder qualitätssicherungsartiger Natur) notwendig, und wertvolles Material geht verloren.

Die physikalischen Eigenschaften der Pigmentpartikeln haben andererseits eine sehr hohe Bedeutung bei deren Einsatz. So besitzen insbesondere kleinste Partikeln eine starke Tendenz zur Agglomerierung, was insbesondere in bezug auf die Dispergierbarkeit der Pigmente [vgl. Farbe und Lack 82/1, 7-14 (1976)] und auf deren Farbstärke einen negativen Einfluss hat.

Es sind schon sehr viele Methoden versucht worden, um die Pigmente in eine staubarme Form zu überführen. Es hat sich jedoch herausgestellt, dass Verbesserungen des Staubverhaltens bei den bekannten Methoden nebst anderen Nachteilen nur auf Kosten anderer physikalischer Eigenschaften der Pigmentpartikeln, insbesondere auf Kosten der Dispergierbarkeit, erzielt werden können. Praktisch gelingt es nur durch Zusatz von Hilfssubstanzen, staubarme gut dispergierbare Pigmentpräparate herzustellen. Die Präsenz der Hilfssubstanzen ist jedoch an sich sehr unerwünscht und wird nur als kleineres Übel toleriert. Aufgrund der resultierenden Kompatibilitätsprobleme mit den zu pigmentierenden Substraten müssen zudem für jedes Pigment verschiedene Pigmentpräparate hergestellt werden, was die Logistik erschwert und die Herstellungskosten erhöht. Deshalb vermögen die hiemach beschriebenen, bekannten Methoden den schon viele Jahre bestehenden Wunsch nach staubfreien organischen Pigmenten mit unverändert guten physikalischen Eigenschaften nicht im gewünschten Mass zu befriedigen.

DE-OS 27 48 243 beschreibt die Granulierung von Talcum, wodurch ein hohes Schüttgewicht erreicht wird. Befeuchtet wird auf einen Wassergehalt von 5 bis 30% mit Wasser oder Dampf. Die Zusatzstoffe lassen jedoch keine Verwendung zur Pigmentierung von hochmolekularen Materialien zu.

FR 2 179 137 beschreibt die Granulierung von wasserlöslichen Farbstoffen in Gegenwart von Zusatzstoffen, welche keine Verwendung zur Pigmentierung von hochmolekularen Materialien zulassen. Im Beispiel 2 wird während des Knetens Methanol zugegeben.

Eine andere bekannte Kompaktierungsmethode ist die Rollgranulierung. DE-OS 27 23 221 offenbart eine Rollgranulierung bei Raumtemperatur, so dass der Gleichgewichtswert der Sorption von Wasserdampf des Substanzpulvers überschritten wird. Es bilden sich Flüssigkeitströpfchen, welche die Agglomeration auslösen. Mit organischen Pigmenten wird jedoch kein brauchbares Granulat, sondern ein immer noch staubendes Pulver erhalten. Wird die Flüssigkeitsmenge erhöht, so kommt es zudem trotz Vorsichtsmassnahmen zu stark agglomerierten Produkte mit gegenüber dem Pulver verschlechterten anwendungstechnischen Eigenschaften. Krustenbildung kann trotz des Einsatzes eines Vibrators nicht ganz vermieden werden.

FR 2 405 983 offenbart ein Verfahren zur Herstellung eines staubarmen Granulates, wobei das Pigment in einem fluidisierten Bett mit einer Bindemittellösung oder -emulsion bespritzt wird. Unter anderem sind Anthrachinon- und Isoindolinonpigmente erwähnt. Im Beispiel 12 wird ein Pigmentpräparat hergestellt, bestehend aus 90,4% C.I. Pigment Yellow 109, 3,7% Ethylenoxid/Propylenoxid-Copolymer, 0,5% Hydroxypropylcellulose und 5,4% Oleylalkohol. Diese Bindemittelmenge ist jedoch für viele Pigmentanwendungen viel zu hoch.

EP 403 917 offenbart die Herstellung von Pigmentpräparaten enthaltend 3 bis 30 Gew.-% eines Tensids, wobei die Pigmente als wässrige Dispersionen eingesetzt werden. In den Beispielen werden Temperaturen von 50 bis 90°C angegeben. Unter den offenbarten Pigmenten befinden sich weder Aminoanthrachinon- noch Isoindolinon- oder Diketopyrrolo-(3,4c)pyrrol-pigmente (Nomenklatur nach W. Herbst und K. Hunger, "Industrial Organic Pigments", ©VCH 1993). Obwohl die Menge Tensid bis auf 3 Gew.-% reduziert werden kann, ist sie jedoch für viele Anwendungen immer noch zu hoch. Zudem fällt das Produkt nicht in staubfreier, sondern in pulvriger Form an.

Es sind auch aus EP 424 896 staubarme Farbmittel-Feingranulate bekannt, welche einen noch niedrigeren Gehalt an wachsartigem Bindemittel und sonstigen Fremdstoffen haben.

Von wesentlicher Bedeutung ist die Verwendung eines Geräts, worin das Beschickungsgut überwiegend starker Turbulenz und mässigen Prallkräften bei zurücktretenden Scherbeanspruchungen ausgesetzt wird. Dieses Verfahren eignet sich jedoch vorwiegend für anorganische Pigmente, und es ist nur ein einziges Beispiel eines organischen Pigmentes offenbart, wobei in Beispiel 13 das Monoazopigment Pigment Red 176, als Wachs 0,72 Gew.% einer Fettsäurenmischung mit Schmelzpunkt 57-61°C, und 50-51 Gew.% Wasser verwendet werden (jeweils bezogen auf das Feingranulat). Der Wachs wird über eine Düse auf das Pigment besprüht.

Schliesslich sind aus EP 510 392 angeblich leicht dispergierbare und staubarme Granulate bekannt, welche gegenüber dem Ausgangspigment infolge der bei der Trocknung erhalten bleibenden Hohlräumen eine starke Volumenvergrösserung aufweisen. Dabei werden feine Blasen eines inerten Gases in eine wässrige Pigmentsuspension drucklos dispergiert. Die Formgebung erfolgt nach mechanischer Abtrennung der Flüssigkeit nach bekannten Methoden; für die Formpressung zu Strangen wird eine Restfeuchte von 50 bis 80 Gew.% angegeben. Diese Methode ist jedoch sehr aufwendig, und die Produkte weisen eine unbefriedigende Homogenität auf.

Zudem ergeben insbesondere organische Farbpigmente, welche im feuchten Zustand infolge ihrer physikalischen Eigenschaften eine starke Agglomerierungstendenz aufweisen, mit diesen bekannten Agglomerierungsmethoden in bezug auf Dispergierbarkeit und Staubverhalten nicht im gewünschten Mass befriedigende Resultate.

Ziel der Erfindung war es, ein möglichst staubfreies, gut dispergierbares, konzentriertes und universell anwendbares organisches Pigmentgranulat zu schaffen, worin ausser des äusserlichen Aspekts die physikalischen Parameter der Pigmentpartikeln gegenüber dem pulverigen Ausgangspigment im Gegensatz zu den bekannten Granulaten möglichst wenig verändert sind. Unter physikalischen Parametern werden ausser den zuvor erwähnten Eigenschaften auch alle weiteren messtechnisch erfassbaren oder anwendungstechnisch relevanten Eigenschaften verstanden. Dieses Pigmentgranulat sollte möglichst durch einfache und universell anwendbare Methoden, in einfachen, billigen und leicht zu reinigenden Apparaturen sowie ohne unbedingt notwendigen Zusatz von organischen Lösungsmitteln hergestellt werden können.

Das Ziel der Erfindung konnte äusserst überraschend durch die vorliegende Erfindung auf sehr einfachem Weg erreicht werden.

Die Erfindung betrifft ein Verfahren zur Granulierung eines rieselfähigen pulverigen organischen Pigments, dadurch gekennzeichnet, dass das Pigment mit 7 bis 200 Gew.-%, bezogen auf das Trockengewicht des Pigments, mindestens eines in dessen Molekül Sauerstoff enthaltenden gasförmigen inerten Stoffes, welches bei 20°C / 1 bar flüssig ist und einen Siedepunkt von nicht mehr als 150°C aufweist, bei einer Temperatur von 15 bis 120°C behandelt wird.

Bevorzugt wird mit 40 bis 150 Gew.-%, besonders bevorzugt 60 bis 100 Gew.-%, bezogen auf das Trockengewicht des Pigments, gasförmigen inerten Stoffes behandelt. Die optimale Menge hängt von der chemischen Identität und von der spezifischen Oberfläche des Pigmentes, sowie von der gewünschten Festigkeit des Granulates ab, und lässt sich für jedes Pigment leicht durch übliche Methoden ermitteln, beispielsweise einfach durch visuelle Verfolgung der Granulierung. Die Temperatur beträgt bevorzugt von 30 bis 100°C, besonders bevorzugt von 60 bis 80°C, wobei man jedoch auch bei Raumtemperatur (etwa von 15 bis 30°C) durchaus zufriedenstellende Resultate bekommen kann.

Besonders bevorzugt soll die Höchstmenge des inerten Stoffes die Sättigungsgrenze der Aufnahmefähigkeit des Pigmentes bei der Behandlungstemperatur nicht überschreiten, so dass es nicht zur Bildung einer flüssigen Phase kommen kann. In welcher Phase oder Form der vom Pigment gasförmig aufgenommene inerte Stoff vorliegt, ist hingegen offen. Bei der Berechnung der Sättigungsgrenze ist die lokale Konzentration des gasförmigen inerten Stoffes in unmittelbarer Nähe des Pigmentes zu berücksichtigen.

Ein inerter Stoff ist ein Stoff, welcher durch das Verfahren im wesentlichen chemisch nicht verändert wird. Dabei können aber zwischen dem inerten Stoff und dem Pigment sehr wohl bindende Kräfte auftreten, zum Beispiel, Spannungs-, Kapillar- oder van der Waal'sche Kräfte oder Wasserstoffbrücken. Zweckmässig sind inerte Stoffe, worin das zu granulierende Pigment bei 15 bis 150°C schwerlöslich ist (≤100 mg/l). In deren Molekül Sauerstoff enthaltende inerte Stoffe sind beispielsweise Alkohole, Ketone, Carbonsäuren und deren Ester, sowie auch Wasser. Bevorzugt ist ein C₁-C₈Alkohol, ein C₃-C₈Keton, Wasser oder ein Gemisch davon. Besonders bevorzugt sind solche inerte Stoffe, welche mindestens eine Hydroxygruppe aufweisen.

Beim C₁-C₈Alkohol kann es sich gegebenenfalls beispielsweise um Methanol, Ethanol, n-Propanol, Isopropanol oder ein Butanol handeln, welche rein oder insbesondere auch als wässerige Gemische verwendet werden können. Bevorzugt sind C₁-C₄Alkohole, insbesondere Methanol, Ethanol, Isopropanol oder n-Butanol.

Beim C₃-C₈Keton kann es sich gegebenenfalls beispielsweise um Aceton, Ethylmethylketon, Methylpropylketon oder Cyclohexanon handeln, welche rein oder insbesondere auch als wässerige Gemische verwendet werden können. Bevorzugt sind C₃-C₆Ketone, insbesondere Aceton oder Ethylmethylketon, besonders bevorzugt Ethylmethylketon.

Ganz besonders bevorzugt verwendet man jedoch von 90 bis 100 Gew.% Wasser, bezogen auf die Gesamtmenge inerten Stoffes, wobei man insbesondere ausschliesslich Wasser verwenden kann.

Wird ein Gemisch aus Wasser, einem C₁-C₈Alkohol und/oder einem C₃-C₈Keton verwendet, so handelt es sich bevorzugt dabei um ein azeotropisches Gemisch. Dadurch ist vorteilhaft die einfache Wiederverwendung des Gemisches möglich.

Die Sauerstoff enthaltenden inerten Stoffe werden zweckmässig gasförmig den Pigmenten zugeführt, beispielsweise in Form ihrer Dämpfe, welche rein oder gegebenenfalls mit einem Trägergas verdünnt sein können.

Unter rieselfähiges pulveriges Pigment soll ein Pigment verstanden werden, welches durch einen Metallsieb der Maschenweite 1×1 mm im wesentlichen ohne direkte Krafteinwirkung geschüttet werden kann (leichtes Schütteln ist keine direkte Krafteinwirkung). Bei den rieselfähigen pulverigen Pigmenten handelt es sich beispielsweise um trockene, handelsübliche Pigmente, welche gegebenenfalls gemahlen sein können und besonders vorteilhaft die Herstellung sehr homogener Granulate ermöglichen.

Bevorzugt eignet sich das erfindungsgemässe Verfahren für organische Pigmente, welche in Gegenwart von flüssigem Wasser beim Trocknen stark agglomerieren, so dass unter üblichen Dispergierbedingungen unerwünscht andere färberische Resultate erhalten werden, als mit trocken gebliebenem Pigmentpulver. Der Fachmann weiss oder kann experimentell auf einfache Weise feststellen, welche Pigmente in Gegenwart von flüssigem Wasser beim Trocknen stark agglomerieren und daher zur Vermiedung dieser Agglomeration besonders vorteilhaft nach dem erfindungsgemässen Verfahren granuliert werden können.

Besonders bevorzugte Pigmente sind Aminoanthrachinon-, Isoindolinon- oder Diketopyrrolo-(3,4c)pyrrol-pigmente, welche die Teilstrukturen (I), (II) beziehungsweise (III) aufweisen:

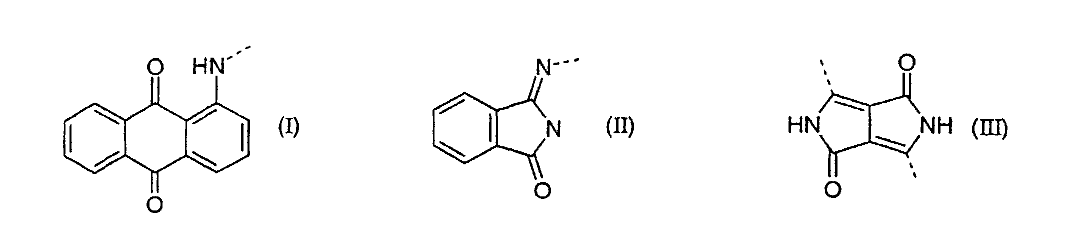

Ganz besonders bevorzugte Pigmente sind Aminoanthrachinon- oder Diketopyrrolo-(3,4c)pyrrol-pigmente, insbesondere Aminoanthrachinonpigmente.

Das bevorzugte Aminoanthrachinonpigment ist C.I. Pigment Red 177 der Formel (IV)

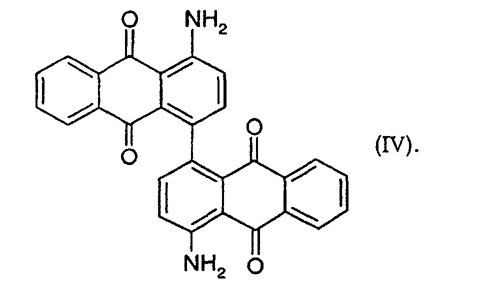

Bevorzugte lsoindolinonpigmente sind der Formel (Va) oder (Vb), 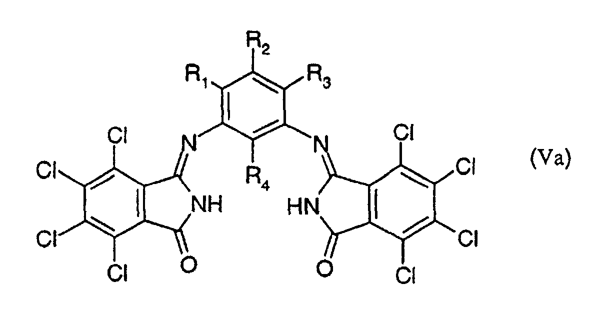 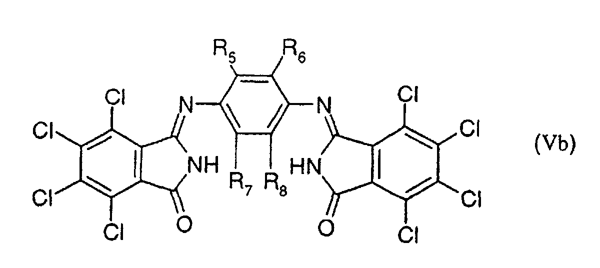 worin R₁, R₂, R₃, R₄, R₅, R₆, R₇ und R₈ unabhängig voneinander Wasserstoff, C₁-C₁₈Alkyl, C₁-C₄Alkoxy, Halogen oder Trifluoromethyl bedeuten.

Besonders bevorzugtes Isoindolinonpigment ist C.I. Pigment Yellow 110.

Bevorzugte Pyrrolo(3,4-c)pyrrolpigmente sind der Formel (VI), 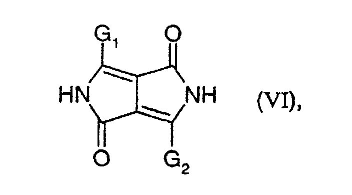 worin G₁ and G₂ unabhängig voneinander eine Gruppe der Formel 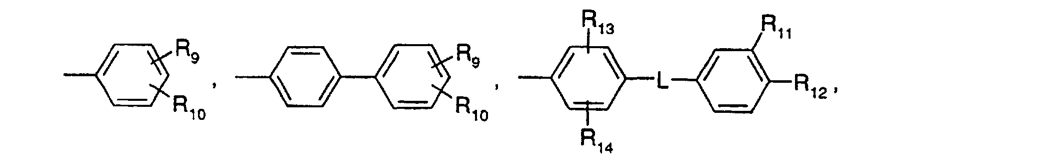 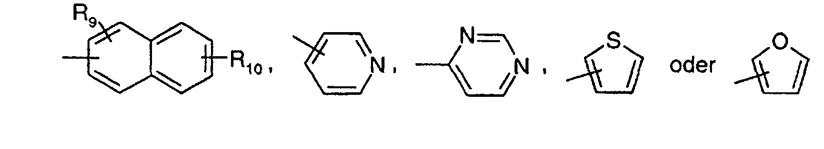 sind, worin R₉ und R₁₀ unabhängig voneinander Wasserstoff, Halogen, C₁-C₁₈Alkyl, C₁-C₁₈Alkoxy, C₁-C₁₈Alkylthio, C₁-C₁₈Alkylamino, C₂-C₁₈Dialkylamino, -CN, -NO₂, Phenyl, Trifluoromethyl, C₅-C₆Cycloalkyl, Imidazolyl, Pyrazolyl, Triazolyl, Piperazinyl, Pyrrolyl, Oxazolyl, Benzoxazolyl, Benzthiazolyl, Benzimidazolyl, Morpholinyl, Piperadinyl, Pyrrolidinyl, -C=N-(C₁-C₁₈Alkyl) oder 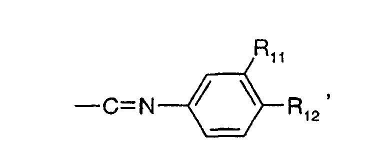 R₁₁ und R₁₂ unabhängig voneinander Wasserstoff, Halogen, C₁-C₆Alkyl, C₁-C₆Alkoxy oder -CN,
R₁₃ und R₁₄ unabhängig voneinander Wasserstoff, Halogen oder C₁-C₆Alkyl,
L -CH₂-, -CH(CH₃)-, -C(CH₃)₂-, -CH=N-, -N=N-, -O-, -S-, -SO-, -SO₂- oder -NR₁₅-, und
R₁₅ Wasserstoff oder C₁-C₆Alkyl bedeuten.

Besonders bevorzugtes Pyrrolo(3,4-c)pyrrolpigment ist C.I. Pigment Red 254.

Bedeuten etwaige Substitutenten Halogen, dann handelt es sich zum Beispiel um Jod, Fluor, insbesondere Brom und bevorzugt Chlor.

Bei C₁-C₄Alkyl handelt es sich beispielsweise um Methyl, Ethyl, n-Propyl, Isopropyl, n-Butyl, sec.-Butyl oder tert.-Butyl, bei C₁-C₆Alkyl zusätzlich zum Beispiel um n-Amyl, tert.-Amyl oder Hexyl, und bei C₁-C₁₈Alkyl nochmals zusätzlich zum Beispiel um Heptyl, Octyl, 2-Ethylhexyl, Nonyl, Decyl, Dodecyl, Tetradecyl, Hexadecyl oder Octadecyl.

C₅-C₆Cycloalkyl bedeutet zum Beispiel Cyclopentyl und insbesondere Cyclohexyl.

C₁-C₄Alkoxy bedeutet zum Beispiel Methoxy, Ethoxy, n-Propoxy, Isopropoxy, Butyloxy,und C₁-C₁₈Alkoxy zusätzlich zum Beispiel Hexyloxy, Decyloxy, Dodecyloxy, Hexadecyloxy oder Octadecyloxy.

C₁-C₁₈Alkylthio steht beispielsweise für Methylthio, Ethylthio, Propylthio, Butylthio, Octylthio, Decylthio, Hexadecylthio oder Octadecylthio.

C₁-C₁₈Alkylamino bedeutet zum Beispiel Methylamino, Ethylamino, Propylamino, Hexylamino, Decylamino, Hexadecylamino oder Octadecylamino.

C₂-C₁₈Dialkylamino bedeutet zum Beispiel Dimethylamino, Diethylamino, Methylpropylamino, Ethylhexylamino, Methyldecylamino, Dioctylamino oder Ethylhexadecylamino, wobei die Kohlenstoffatome beider Alkylreste zusammengezählt werden.

Das erfindungsgemäss verwendete organische Pigment hat bevorzugt eine Korngrösse von 0,01 bis 10 µm. Darunter wird verstanden, dass mindestens 90 Gew.% der Partikeln diese Korngrösse aufweisen. Bevorzugt hat das organische Pigment eine mittlere Korngrösse von 0,2 bis 2 µm. Besonders bevorzugt hat das organische Pigment eine enge Korngrössenverteilung, das heisst mindestens 80 Gew.% der Partikeln haben eine Korngrösse, welche in einem höchsten eine Zehnerpotenz grossen Bereich liegt, beispielsweise zwischen 0,5 und 5 µm oder zwischen 0,2 und 2 µm. Eine enge Korngrössenverteilung kann durch dem Fachmann bekannte Methoden erreicht werden, zum Beispiel durch eine Behandlung in einer polaren inerten Flüssigkeit bei erhöhter Temperatur. Geeignete Flüssigkeiten, Temperaturen und Dauer dieser Behandlung, welche je nach Pigment sehr unterschiedlich sein können, sind dem Fachmann bestens bekannt. Für alle Pigmentklassen sowie für viele einzelne Pigmente wurden sie auch in der Fachliteratur offenbart.

Das Pigment kann ganz trocken sein oder eine gewisse Restfeuchte enthalten, welche jedoch bevorzugt so tief sein muss, dass die Rieselfähigkeit nicht beeinträchtigt wird. Restfeuchte kann beispielsweise Wasser sein, oder auch ein übliches Verdünnungsmittel mit einem Siedepunkt von zirka 50 bis 220°C. Bevorzugt beträgt die Menge Restfeuchte höchstens 5%, besonders bevorzugt höchstens 1%, bezogen auf das Gesamtgewicht des feuchten Pigments. Das Pigment kann rein sein, oder es kann auch Zusatzstoffe enthalten, ausgewählt aus üblichen Zusatzstoffen wie zum Beispiel alle dem Fachmann bekannten Bindemittel, texturverbessernde Mittel und Emulgatoren.

Beim Bindemittel kann es sich beispielsweise um eine gesättigte oder ungesättigte, langkettige reine Säure handeln, um ein Gemisch derselben, zum Beispiel um ein Homologengemisch, oder um deren Ester oder Salze. Langkettige Säuren sind solche, worin mindestens eine aus 8 C-Atomen bestehende lineare Kette vorkommt. Bevorzugte Bindemittel sind auf Basis Abietinsäure. Die Bindemittelmenge beträgt bevorzugt höchstens 2 Gew.%, so dass man ein universelles Granulat mit sehr guter Kompatibilität in möglichst vielen Anwendungen (beispielsweise in Lackierungen) bekommen kann. Ganz besonders bevorzugt ist ein Granulat, welches weniger als 0,5 Gew.% Bindemittel enthält oder sogar ganz bindemittelfrei ist. Obwohl im letzteren Fall unklar ist, wie die Pigmentpartikel im Granulat zusammengehalten werden, hat sich höchst überraschend erwiesen, dass auch ein bindemittelfreies, erfindungsgemäss hergestelltes Granulat eine sehr erstaunliche gute Dispergierbarkeit bei guter mechanischen Stabilität aufweist.

Beim Emulgator kann es sich beispielsweise um ein Copolymer von Ethylenoxid und Propylenoxid, ein Fettalkoholethoxylat oder ein Alkylphenolethoxylat handeln, zum Beispiel um einen Emulgator der Emulan®-Reihe (BASF). Die Emulgatormenge beträgt bevorzugt höchstens 1 Gew.%.

Zusatzstoffe sind voneinander unabhängig und alle fakultativ. Gegebenenfalls können sie vor oder während der Granulierung zugegeben werden. Je nach den gewünschten Granulateigenschaften kann man Zusatzstoffe mit beliebigen Funktionen in beliebiger Kombination verwenden. Die bevorzugte Gesamtmenge Zusatzstoffe beträgt bevorzugt höchstens 2 Gew.%, besonders bevorzugt höchstens 0,5%. Besonders bevorzugt besteht die Granuliermasse im wesentlichen aus dem organischen Pigment, dem Sauerstoff enthaltenden inerten Stoff, sowie gegebenenfalls der Restfeuchte des Pigments und/oder den Zusatzstoffen. Ganz besonders bevorzugt besteht die Granuliermasse im wesentlichen aus dem organischen Pigment und dem Sauerstoff enthaltenden inerten Stoff.

Das erfindungsgemässe Verfahren wird zweckmässig derart durchgeführt, dass die Pigmentpartikel leicht bewegt werden, jedoch ohne Einwirkung von Press- oder Scherkräften. Bevorzugt wird dafür gesorgt, dass eine gute Durchmischung mit dem gasförmigen inerten Stoff gewährleistet ist; eine hohe Turbulenz ist jedoch nicht notwendig. Dies kann in einer beliebigen Apparatur erfolgen, sofern diese derart betrieben werden kann, dass Press- oder Scherkräfte nicht oder kaum auftreten. Bevorzugt ist die Apparatur heizbar. Beispielsweise kann ein um die eigene Achse nicht vertikal rotierendes Gefäss, wie zum Beispiel eine Drehtrommel, oder eine Wirbelbettapparatur, wie zum Beispiel ein Sprühtrockner, verwendet werden. Ein besonderer Vorteil des Sprühtrockners ist, dass die Granulierung direkt im Anschluss auf die Trocknung durchgeführt werden kann.

Das Pigment wird in der Apparatur vorgelegt, wonach der gasförmige inerte Stoff zugeführt wird, bis dessen gewünschte Menge vom Pigment aufgenommen wurde. Hat das Granulat die erwünschte Korngrösse dabei noch nicht erreicht, so wird die Bewegung der Pigmentpartikel noch eine Weile fortgesetzt. Bevorzugt wird der gasförmige inerte Stoff im Gemisch mit einem Trägergas, wie zum Beispiel Luft oder Stickstoff, möglichst nahe zum Pigment eingeführt. Besonders bevorzugt liegt der Einlass möglichst weit vom Auslass des Trägergases, zum Beispiel an einer entgegengesetzten Stelle der Apparatur. Das Verfahren kann batchweise oder gegebenenfalls auch kontinuierlich betrieben werden.

Vorteilhaft beim erfindungsgemässen Verfahren ist, dass man sehr einfache Einleitungsvorrichtungen (beispielsweise einfache Düsen) verwenden kann. Die Menge Trägergas kann unabhängig von der Menge gasförmigen inerten Stoffes eingestellt werden; man kann die Menge Trägergas gewünschtenfalls niedrig halten, oder sogar gegebenenfalls ganz darauf verzichten. Zudem kann die Menge gasförmigen inerten Stoffes ohne Umbau der Apparatur, zum Beispiel während des Betriebs, in weiten Grenzen variiert werden.

Das granulierte Produkt kann auf bekannte Weise direkt nach der Granulierung getrocknet werden. Dies kann in der gleichen Apparatur oder nach dem Transferieren des Produktes in einen üblichen Trockner erfolgen. Gegebenenfalls kann auch das granulierte Produkt noch zusätzlich geformt werden, zum Beispiel indem es einer weiteren Granulierungsstufe unterworfen, und erst dann getrocknet wird. Bevorzugt wird in letzterem Fall die weitere Granulierung bei tiefem Druck durchgeführt, wobei besonders bevorzugt das in WO 98/17729 beschriebene Granulierungsverfahren verwendet wird.

Die erfindungsgemäss hergestellten Pigmentgranulate sind staubarm und ausgezeichnet dispergierbar. Die physikalischen Parameter der im Pigmentgranulat enthaltenen Pigmentpartikeln sind gegenüber denjenigen der Pigmentpartikeln im pulverigen Ausgangspigment kaum verändert. In der Regel hat das im Pigmentgranulat enthaltene organische Pigment deswegen ebenfalls eine Korngrösse von 0,01 bis 10 µm.

Die erfindungsgemäss hergestellten Pigmentgranulate eignen sich wegen der zuvor erläuterten Eigenschaften in färberisch wirksamer Menge vorzüglich zum Pigmentieren von hochmolekularem organischem Material, insbesondere von Kunststoffen und Lackierungen.

Das hochmolekulare organische Material, zur Pigmentierung dessen die erfindungsgemäss hergestellten Pigmentgranulate verwendet werden können, kann natürlicher oder künstlicher Herkunft sein. Hochmolekulare organische Materialien weisen üblicherweise Molekulargewichte von zirka 10³ bis 10⁷ g/mol oder noch mehr auf. Es kann sich zum Beispiel um Naturharze, trocknende Öle, Gummi oder Casein oder davon abgewandelte Naturstoffe, wie Chlorkautschuk, ölmodifizierte Alkydharze, Viscose, um Celluloseäther oder Ester, wie Ethylcellulose, Celluloseacetat, Cellulosepropionat, Celluloseacetobutyrat oder Nitrocellulose handeln, insbesondere aber um vollsynthetische organische Polymere (Duroplaste und Thermoplaste), wie sie durch Polymerisation, Polykondensation oder Polyaddition erhalten werden. Aus der Klasse der Polymerisationsharze seien in erster Linie Polyolefine, wie Polyethylen, Polypropylen oder Polyisobutylen, ferner substituierte Polyolefine, wie Polymerisate aus Vinylchlorid, Vinylalkohol, Vinylacetat, Butylacetat, Styrol, Acrylnitril, Acryl- oder Methacrylsäure, Acrylsäure- oder Methacrylsäureester oder Butadien, sowie Kopolymerisate der erwähnten Monomeren, wie insbesondere ABS oder EVA, genannt.

Aus der Reihe der Polyadditionsharze und Polykondensationsharze seien die Kondensationsprodukte von Formaldehyd mit Phenolen, die sogenannten Phenoplaste, und die Kondensationsprodukte von Formaldehyd mit Harnstoff, Thioharnstoff und Melamin, die sogenannten Aminoplaste, die als Lackharze verwendeten Polyester, und zwar sowohl gesättigte, wie zum Beispiel Alkydharze, als auch ungesättigte, wie beispielsweise Maleinatharze, ferner die linearen Polyester und Polyamide, Polyurethane oder Silikone genannt.

Die erwähnten hochmolekularen Verbindungen können einzeln oder in Gemischen, als plastische Massen oder Schmelzen vorliegen. Sie können auch in Form ihrer Monomeren oder im polymerisierten Zustand in gelöster Form als Filmbildner oder Bindemittel für Lacke oder Druckfarben vorliegen, wie zum Beispiel Leinölfirnis, Nitrocellulose, Alkydharze, Melaminharze und Harnstoff-Formaldehydharze oder Acrylharze.

Die erfindungsgemäss hergestellte Pigmentgranulate können in beliebiger färberisch wirksamer Menge dem zu pigmentierenden hochmolekularen organischen Material zugesetzt werden. Zweckmässig enthält eine pigmentierte Stoffzusammensetzung 0,1-30 Gew.-%, bevorzugt 1-20 Gew.-%, bezogen auf das zu pigmentierende hochmolekulare organische Material, eines erfindungsgemässen Pigmentgranulats.

Zur Pigmentierung von organischen Materialien können die erfindungsgemäss hergestellte Pigmentgranulate einzeln gebraucht werden. Es ist aber ebenfalls möglich, zwecks Erzielung verschiedener Farbtöne oder Farbeffekte den hochmolekularen, organischen Stoffen neben den erfindungsgemässen Pigmentgranulaten andere farbgebende Bestandteile wie Weiss-, Bunt-, Schwarz- oder Effektpigmente in beliebigen Mengen zuzufügen.

Die Pigmentierung der hochmolekularen, organischen Substanzen mit den erfindungsgemäss hergestellten Pigmentgranulaten erfolgt beispielsweise derart, dass man ein solches Pigmentgranulat diesen Substraten unter Verwendung von Walzwerken, Misch- oder Mahlapparaten zumischt. Das pigmentierte Material wird hierauf nach an sich bekannten Verfahren wie Kalandrieren, Pressen, Strangpressen, Streichen, Giessen oder Spritzgiessen in die gewünschte endgültige Form gebracht. Alle in der Kunststoffindustrie üblichen Zusätze, wie beispielsweise Weichmacher, Füllstoffe oder Stabilisatoren, können in gebräuchlichen Mengen vor oder nach der Einverleibung des Pigments in die Polymeren eingearbeitet werden. Insbesondere ist es erwünscht, zur Herstellung von nicht starren Formlingen oder zur Verringerung ihrer Sprödigkeit den hochmolekularen Verbindungen vor der Verformung Weichmacher, zum Beispiel Ester der Phosphorsäure, Phthalsäure oder Sebacinsäure, einzuverleiben.

Zum Pigmentieren von Lacken und Druckfarben werden die hochmolekularen organischen Materialien und die erfindungsgemäss hergestellte Pigmentgranulate, gegebenenfalls zusammen mit üblichen Zusatzstoffen wie beispielsweise Füllmitteln, anderen Pigmenten, Siccativen oder Weichmachern, in einem gemeinsam organischen Lösungsmittel oder Lösungsmittelgemisch fein dispergiert bzw. gelöst. Man kann dabei so verfahren, dass man die einzelnen Komponenten für sich oder auch mehrere gemeinsam dispergiert bzw. löst, und erst hierauf alle Komponenten zusammenbringt.

Die erhaltenen Färbungen, beispielsweise in Kunststoffen, Lacken oder Druckfarben, bevorzugt in Lacken oder Druckfarben, besonders bevorzugt in Lacken, zeichnen sich durch vorzügliche Eigenschaften aus, welche denjenigen der pulverigen Pigmente entsprechen.

Handelt es sich beim zu pigmentierenden hochmolekularen Material um einen Lack, so handelt es sich insbesondere um einen Speziallack, ganz besonders bevorzugt um einen Automobillack.

Die nachfolgenden Beispiele verdeutlichen die Erfindung, ohne deren Inhalt zu begrenzen:

Beispiel 1 : 142,5 g trockenes pulveriges 4,4'-diamino-1,1-dianthrachinonyl (C.I. Pigment Red 177 [65300]) werden in einem 3 I-Glaskolben am ®Rotavapor (Büchi AG, CH-Flawil) vorgelegt, welches in einem Bad taucht. Die Drehgeschwindigkeit wird auf 11 U/min und die Badtemperatur auf 80°C eingestellt. Andererseits wird Luft durch Einleiten in knapp unter dem Siedepunkt erhitztes Wasser mit Wasserdampf beladen und das resultierende tröpfchenfreie Gasgemisch durch einen auf 105°C thermostatisierten Wärmeaustauscher geleitet. Der Luftstrom wird auf 34 l/h eingestellt, dann während 3 h durch einen bis tief in den Glaskolben reichenden Rohr zum Pigment eingeleitet. Die Gesamtmenge vom Pigment aufgenommenen Wasserdampfes beträgt 91,0 g. Das feuchte Granulat wird auf eine Schale gekippt und bei 90°C/160 mbar getrocknet. Typische Granulatkörner weisen eine runde Form etwa der Dimensionen 1×1×2 mm auf. Das Granulat staubt kaum und ergibt beim konventionellen Einarbeiten in Weich-PVC mittels eines Walzwerkes färberisch fast identische Resultate, wie das pulverige Edukt.

Beispiel 2 : 102,5 g trockenes pulveriges C.I. Pigment Red 177 werden in einem 3 l-Glaskolben am ®Rotavapor (Büchi AG, CH-Flawil) vorgelegt, welches in einem Bad taucht. Die Drehgeschwindigkeit wird auf 14 U/min und die Badtemperatur auf 70°C eingestellt. Andererseits wird Luft durch Einleiten in auf etwa 60°C erhitztes Wasser mit Wasserdampf beladen und das resultierende tröpfchenfreie Gasgemisch durch einen auf 105°C thermostatisierten Wärmeaustauscher geleitet. Der Luftstrom wird auf 120 l/h eingestellt, dann während 4,6 h durch einen bis tief in den Glaskolben reichenden Rohr zum Pigment eingeleitet. Die Gesamtmenge vom Pigment aufgenommenen Wasserdampfes beträgt 75,1 g. Das feuchte Granulat wird auf eine Schale gekippt und bei 90°C/160 mbar getrocknet. Typische Granulatkörner weisen eine runde Form etwa der Dimensionen 1x1x2 mm auf. Das Granulat staubt kaum und ergibt beim konventionellen Einarbeiten in Weich-PVC mittels eines Walzwerkes färberisch fast identische Resultate, wie das pulverige Edukt.

Beispiel 3 : Analog Beispiel 1 behandelt man 128,3 g trockenes 3,6-Di(4'-chlor-phenyl)-2,5-dihydro-pyrrolo[3,4-c]pyrrol-1,4-dion (C.I. Pigment Red 254 [56110]) mit 9,1 g Wasserdampf. Das Granulat staubt kaum und ergibt ausgezeichnete applikatorische Resultate in Thermoplasten.

Beispiel 4 : Analog Beispiel 3 behandelt man 124,5 g trockenes C.I. Pigment Red 254 [56110] mit 13,7 g Essigsäureethylesterdampf. Das Granulat staubt kaum und ergibt ausgezeichnete applikatorische Resultate in Thermoplasten.

Beispiel 5 : Analog Beispiel 3 behandelt man 125,0 g trockenes C.I. Pigment Red 254 [56110] mit 24,8 g tert.-Amylalkoholdampf. Das Granulat staubt kaum und ergibt ausgezeichnete applikatorische Resultate in Thermoplasten.

Beispiel 6 : Analog Beispiel 2 behandelt man 104.4 g trockenes C.I. Pigment Red 254 [56110] mit 122,8 g Ethylmethylketondampf. Das Granulat staubt kaum und ergibt ausgezeichnete applikatorische Resultate in Thermoplasten.

Beispiel 7 : Analog Beispiel 2 behandelt man 110,9 trockenes C.I. Pigment Red 177 mit 89,2 g eines azeotropen Dampfgemisches aus Wasser und 1-Butanol (44,5 : 55,5 Gew.-%). Das Granulat staubt kaum und ergibt ausgezeichnete applikatorische Resultate in Thermoplasten.

Beispiel 8 : Man verfährt analog zu Beispiel 7, verwendet jedoch ein ternäres Azeotrop aus Essigsäurebutylester, Wasser und 1-Butanol (63 : 8 : 29 Gew.-%). Das Granulat staubt kaum und ergibt ausgezeichnete applikatorische Resultate in Thermoplasten.

Beispiele 9-16 : Man verfährt analog den Beispielen 1-8, verwendet jedoch anstelle des Glaskolbens einen 5° zur Horizontalen geneigten, zylindrischen Rollgranulator von 200 mm Durchmesser, 600 mm Länge und Sturzblendendurchmesser 100 mm. Bei 10 U/Min beträgt die Fördermenge etwa 1 Kg/h, bezogen auf das trockene Pigment. Die Resultate sind mit denjenigen der Beispiele 1-8 vergleichbar.

Vergleichsbeispiel 1 : Analog den Beispielen 1 und 9 von DE-OS 27 23 221 werden in einem zylindrische Rollgranulator vom Durchmesser 200 mm 300 g trockenes C.I. Pigment Red 177 während 1,7 Minuten mit 30,6 g Wasser durch eine Zweistoffdüse gleichmässig besprüht. Der Stickstoffstrom wird so eingestellt, dass die Tröfchengrösse etwa 10 bis 100 µm beträgt. Dabei gibt es eine starke Staubentwicklung, welche aus der Apparatur entweicht. Das feuchte Produkt (288 g) wird bei 100°C getrocknet. Man bekommt 262 g (87,5%) trockenes Endprodukt, welches keinerlei Granulierung aufweist.

Die auf einem ™-SP3- PN01 (Lorenz Messgerätebau) Sedimentationsmessgerät gemessenen Staubzahlen (S_{F} und Gesamtmenge in %) sind sogar höher, als beim Ausgangsmaterial C.I. Pigment Red 177.

Vergleichsbeispiel 2 : Analog den Beispielen 1 und 9 von DE-OS 27 23 221 werden in einem zylindrische Rollgranulator vom Durchmesser 200 mm 1500 g trockenes C.I. Pigment Red 177 während 20 Minuten mit einem Gemisch aus 300 g Wasser und 75 g ™PROZESSOEL ES 107 (emulgierendes, sulfoniertes Mineralöl, Esso AG) durch eine Zweistoffdüse gleichmässig besprüht. Der Stickstoffstrom wird so eingestellt, dass die Tröfchengrösse etwa 10 bis 100 µm beträgt. Dabei gibt es eine starke Staubentwicklung, welche aus der Apparatur entweicht. Das feuchte Produkt (1659 g) wird bei 100°C getrocknet. Man bekommt 1379 g (91,4%) trockenes Endprodukt, welches keinerlei Granulierung aufweist.

Die auf einem ™-SP3- PN01 (Lorenz Messgerätebau) Sedimentationsmessgerät gemessenen Staubzahlen (S_{F} und Gesamtmenge in %) sind sogar höher, als beim Ausgangsmaterial C.I. Pigment Red 177.

## Patentansprüche

1. Verfahren zur Granulierung eines rieselfähigen pulverigen organischen Pigments, **dadurch gekennzeichnet, dass** das Pigment mit 7 bis 200 Gew.-%, bezogen auf das Trockengewicht des Pigments, mindestens eines in dessen Molekül Sauerstoff enthanenden gasförmigen inerten Stoffes, welches bei 20°C / 1 bar flüssig ist und einen Siedepunkt von nicht mehr als 150°C aufweist, bei einer Temperatur von 15 bis 120°C behandelt wird.

2. Verfahren nach Anspruch 1, worin mit 40 bis 150 Gew.-%, bevorzugt 60 bis 100 Gew.-%, bezogen auf das Trockengewicht des Pigments, gasförmigen inerten Stoffes behandelt wird.

3. Verfahren nach Anspruch 1, worin die Temperatur von 30 bis 100°C, bevorzugt von 60 bis 80°C beträgt.

4. Verfahren nach Anspruch 1, worin der gasförmige inerte Stoff ein C₁-C₈Alkohol, ein C₃-C₈Keton, Wasser oder ein Gemisch davon ist.

5. Verfahren nach Anspruch 1, worin der gasförmige inerte Stoff Wasser ist.

6. Verfahren nach Anspruch 1, worin das pulverige Pigment ein Aminoanthrachinon-, Isoindolinon- oder Diketopyrrolo (3,4c)pyrrol-pigment ist, bevorzugt ein Aminoanthrachinon- oder Diketopyrrolo(3,4c)pyrrol-pigment, besonders bevorzugt ein Aminoanthrachinonpigment.

7. Verfahren nach Anspruch 1, worin das rieselfähige pulverige organische Pigment eine Restfeuchte von höchstens 5%, bevorzugt höchstens 1%, bezogen auf das Gesamtgewicht des feuchten Pigments, aufweist.

8. Verfahren nach Anspruch 1, worin die Gesamtmenge Zusatzstoffe, umfassend Bindemittel, texturverbessemde Mittet und Emulgatoren, höchstens 2 Gew.-%, bevorzugt höchstens 0,5 Gew.-% beträgt, bezogen auf die Menge Granulat

## Claims

1. A process for granulating a free-flowing pulverulent organic pigment, which comprises treating the pigment at a temperature from 15 to 120°C with from 7 to 200% by weight, based on the dry weight of the pigment, of at least one gaseous inert substance which contains oxygen in its molecule, is liquid at 20°C/1 bar and has a boiling point of not more than 150°C.

2. A process according to claim 1, wherein treatment is carried out with from 40 to 150% by weight, preferably from 60 to 100% by weight, based on the dry weight of the pigment, of gaseous inert substance.

3. A process according to claim 1, wherein the temperature is from 30 to 100°C, preferably from 60 to 80°C.

4. A process according to claim 1, wherein the gaseous inert substance is a C₁-C₈alcohol, a C₃-C₈ketone, water or a mixture thereof.

5. A process according to claim 1, wherein the gaseous inert substance is water.

6. A process according to claim 1, wherein the pulverulent pigment is an aminoanthraquinone, isoindolinone or diketopyrrolo[3,4-c]pyrrole pigment, preferably an aminoanthraquinone or diketopyrrolo-[3,4-c]pyrrole pigment and, with particular preference, an aminoanthraquinone pigment.

7. A process according to claim 1, wherein the free-flowing pulverulent organic pigment has a residual moisture content of not more than 5%, preferably not more than 1%, based on the overall weight of the moist pigment.

8. A process according to claim 1, wherein the overall amount of additives, comprising binders, texture improvers and emulsifiers, is not more than 2% by weight, preferably not more than 0.5%, based on the amount of granules.

## Revendications

1. Procédé de granulation d'un pigment organique en poudre, fluide, **caractérisé en ce que** le pigment est traité par 7 à 200 % en poids, par rapport au poids sec du pigment, d'au moins une substance inerte gazeuse, contenant l'oxygène dans sa molécule, laquelle est liquide à 20°C/1 bar et présente un point d'ébullition inférieur à 150°C, à une température de 15 à 120°C.

2. Procédé selon la revendication 1 dans lequel on traite par 40 à 150 % en poids, de préférence 60 à 100% en poids, d'une substance inerte gazeuse, par rapport au poids sec du pigment.

3. Procédé selon la revendication 1 dans lequel la température s'élève de 30 à 100°C, de préférence de 60 à 80°C.

4. Procédé selon la revendication 1 dans lequel la substance inerte gazeuse est un alcool en C₁-C₈, une cétone en C₃-C₈, l'eau ou un mélange de ces substances.

5. Procédé selon la revendication 1 dans lequel la substance inerte gazeuse est l'eau.

6. Procédé selon la revendication 1 dans lequel le pigment en poudre est un pigment aminoanthrachinonique, isoindolinonique ou dicétopyrrolo(3,4c)pyrrolique, de préférence un pigment aminoanthrachinonique ou dicétopyrrolo(3,4-c)-pyrrolique, de manière particulièrement préférée un pigment aminoanthrachinonique.

7. Procédé selon la revendication 1 dans lequel le pigment organique en poudre, fluide, présente une humidité résiduelle d'au maximum 5 %, de préférence d'au maximum 1 %, par rapport au poids total du pigment humide.

8. Procédé selon la revendication 1 dans lequel la quantité totale d'additifs, comprenant des liants, des agents texturants et des émulsifiants, s'élève à 2 % en poids, de préférence à 0,5 % en poids par rapport à la quantité de granulé.
